(19) Europäisches Patentamt
European Patent Office
Office européen des brevets

(11) EP 1 862 813 A1

(12) **EUROPEAN PATENT APPLICATION**

(43) Date of publication:
05.12.2007 Bulletin 2007/49

(51) Int Cl.:
*G01S 3/808* (2006.01)     *G01S 3/805* (2006.01)

(21) Application number: 06011270.3

(22) Date of filing: 31.05.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(72) Inventors:
• **Rodemann, Tobias**
63073 Offenbach/Main (DE)
• **Joublin, Frank**
63073 Offenbach/Main (DE)

(71) Applicant: **Honda Research Institute Europe GmbH**
63073 Offenbach/Main (DE)

(74) Representative: **Rupp, Christian et al**
**Mitscherlich & Partner**
**Patent- und Rechtsanwälte**
**Sonnenstrasse 33**
**80331 München (DE)**

(54) **A method for estimating the position of a sound source for online calibration of auditory cue to location transformations**

(57)     A method for determining the position of a sound source comprises the steps:
directing (210) a first and a second microphone towards the sound source;
measuring (220) the Intra-aural Time Difference (ITD) between the two microphones;
repeating (230) the above two steps (210, 220) until the Intra-aural Time Difference (ITD) is smaller than a predefined threshold ($\varepsilon$).

Fig. 1

Localization cues
(IED/ITD and optionally IID)
Provided by State-of-art localization system

Position estimation
- via ITD/IED zeroing in
- via model-based estimation
- via Cue integration

Online Adaptation

Mapping T

Transmit to Cue Mapping module B

EP 1 862 813 A1

**Description**

FIELD OF INVENTION

The present invention presents new methods to calibrate a sound source localisation system, the calibration relating to the transformation (mapping) of auditory cue information to an estimated position of at least one sound source.
Sound source localisation can find application e.g. for autonomous robotic devices which can use estimated positions of sound sources as targets.

TECHNICAL BACKGROUND

Sound source localisation (i.e. the estimation of the position of a sound source), a general introduction to which may be found in the standard textbook by Jens Blauert (Spatial Hearing: The Psychophysics of Human Sound Localisation, The MIT press, USA-Cambridge MA,1996, 2nd edition), is highly dependent on a large number of internal and external parameters, many of which might change over time. For an autonomous sound source localisation system it is therefore important to have the ability for online adaptation, i.e. re-calibration of the mapping of auditory cue information to an estimated position of at least one sound source during normal operation, in the normal working environment of the autonomous system.
A number of approaches exist (see e.g. reference [1]) for localising a sound source and then directing attention or gaze direction towards the target, i.e. the detected sound source. The basic concept in all approaches is the measurement of one or more so-called localisation cues and the mapping (transformation) of these cues into a location estimation (angular position = azimuth angle).
The most important cues for localisation are so-called binaural cues, that is the comparison of signals recorded in different spatially distanced microphones. This can be done both for a pair of microphones as well as microphone arrays having more than two microphones.
Binaural cue computation makes use of the fact that for microphones at different spatial positions, signals travel along slightly different paths to the two microphones. One well-known binaural cue is the Intra-aural Time Difference (ITD, also known as IPD). It measures the distance in arrival times at the two microphones. A related cue is the Intra-aural Envelope Difference (IED) which has the same characteristics as ITD as far as the present invention is concerned. The ITD and IED depend on the position of the sound source in the horizontal plane spanned by the two microphones and the distance between them (plus on the speed of sound). If there is any type of obstacle between the microphones (e.g. a robot's head) also the shape of the obstacle will have a slight influence on the ITD values.
The second major cue for localisation is the Intra-aural Intensity Difference (IID, also termed ILD). This cue is based on a comparison of signal intensities in the two microphones. If there is a sound obstacle in between, signal intensities will also vary depending on sound source position.
While the dependency of ITD on source localisation can at least be approximated knowing environmental conditions and the distance between the microphones, IID depends on the shape, material and density of any material being present between the microphones. It is therefore very difficult to compute IID as a function of the source position. In addition to the basic dependencies, there is a number of additional factors that might influence cue computation: different signal amplification factors in the two ears, missing synchronisation between left and right microphone recording, type and exact position of microphones, auditory pre-processing stages or the exact method of cue computation, etc..
Especially the analogue part of the recording equipment is also prone to changes due to temperature drifts and variable operating time (system warm up). Another important factor are room characteristics (e.g. echoes) which might also strongly affect the localisation.
Therefore it is a standard practice to pre-calibrate the system in a dedicated set-up to learn the relation between sound position and IED/ ITD / IID cue values. These calibration measurements are generally lengthy and require a substantial effort often taking many hours to execute. This calibration has to be repeated whenever a parameter of the system's hardware has been changed, e.g. microphones are mounted on a different head of a robotic device, new recording hardware is used, amplification factors have been modified, etc.. For changes on the software side at least parts of the calibration procedure have to be repeated. Any of those effects would require a new, lengthy calibration procedure.
It is therefore advisable to allow the system to learn the relation between cues and source position continuously in an unsupervised manner. However, state-of-the-art approaches for learning the cue value - position relation either require special test scenarios (i.e. bringing the system into a defined environment and running a dedicated calibration procedure) or position information from additional sensors. These additional sensors so far only work under very constrained conditions.
EP 1 586 421 A1 outlines a system for sensory-motor learning in a visual learning system which has the basic characteristics for online adaptation as would be necessary for a truly autonomous system. However, an important prerequisite for adaptation is to get the information about the true position of the sound source. If for measured cue values C, the true relative position p of the sound source is known, learning is trivial. Using a mapping function T one gets: T(C) = p or for consecutive measurements for the same cue value C (index t is time step):

$$T(C,t+1) = T(C,t) + alpha * (p(t)-T(C,t)) ,$$

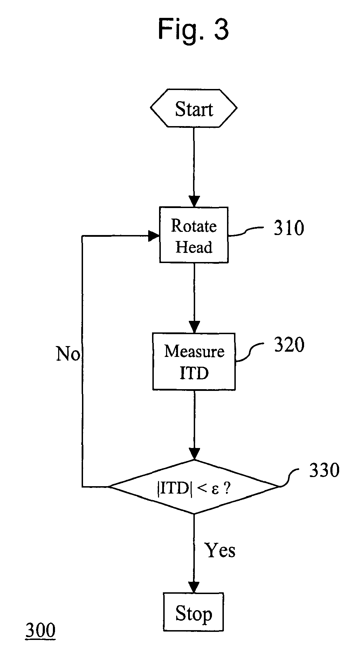

with alpha as a learning parameter (0 < alpha < 1). Alternatively, the mapping function can be of the type T(p) = C as shown in Figure 3. T may be represented for example by a look-up table.

In reference [2] an auto-calibration procedure is shown that uses cameras to visually identify the sound source and measure its position. This approach can not be used for online-adaptation because it is not easy to visually identify a sound source. In the example of [2] the authors made a red mark on the speaker box to be able to identify the source. However, this requires that there are no other red objects in the environment.

OBJECT OF THE INVENTION

It is therefore an object of the invention, to devise a method for adapting a sound sources localisation system online, i.e. its localisation operation.

SHORT SUMMARY OF THE INVENTION

This object is achieved by means of a method for sound source localisation as defined in independent claim 1. Advantageous embodiments are defined in the dependent claims.

The present invention presents methods for detecting the position of the sound source preferably using auditory inputs only. The invention allows an online calibration in realistic settings.

The invention allows for a continuous re-adaptation instead of the lengthy off-line calibration procedure as proposed in the state-of-the-art documents. In contrast to an alternative approach using visual (camera) input to guide adaptation, the proposed system can work solely on auditory inputs, reducing the cost of hardware and the constraints imposed on the environment. A typical application fields for this approach are in robot sound localisation (see e.g. reference [1] for further details in this regard).

As a result the system's localisation performance will be far more robust over longer periods of time.

Furthermore, a continuous adaptation has the potential to learn a better cues/ localisation estimation mapping than standard calibration procedures working over a limited time period.

SHORT DESCRIPTION OF THE FIGURES

Further aspects and advantages of the present invention will become evident when studying the following detailed description, in connection with the annexed drawing, in which

Fig. 1     shows the basic concept of online adaptation.

Fig. 2     shows a configuration of a system for sound source localisation according to the invention.

Fig. 3     shows a flowchart of a method for sound source localisation according to the invention.

Fig. 4     shows an example of a mapping T(p) between relative source positions.

Fig. 5     shows the absolute value of ITD as a function of position for an example robot system.

Fig. 6     shows a flowchart of another method for sound source localisation according to the invention.

Fig. 7     shows a flowchart of another method for sound source localisation according to the invention.

DETAILED DESCRIPTION OF THE INVENTION

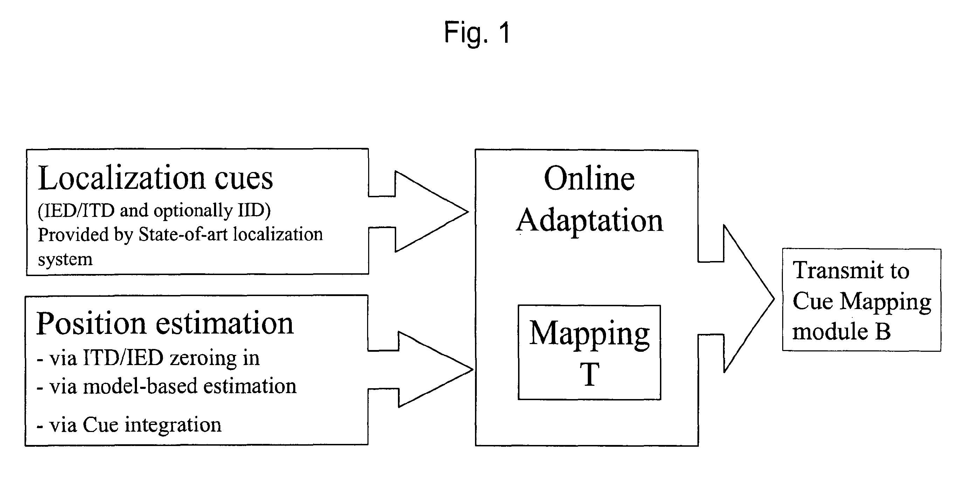

**Figure 1** shows the basic concept of online adaptation. Localisation cues, such as e.g. IED/ITD and optionally IID may be provided by a known localisation system. The position may be estimated either by zeroing in using ITD/IED, by model-based estimation or by cue integration. Both localisation cues and estimated position are supplied to an online adaptation module, where the mapping T from the cue values to a defined (e.g. space or actuator) coordinate system is computed. The mapping T is transmitted to a cue mapping module B. Using the mapping transformation matrix T an estimated position of a sound source can be calculated based on supplied auditory localisation cue signals.

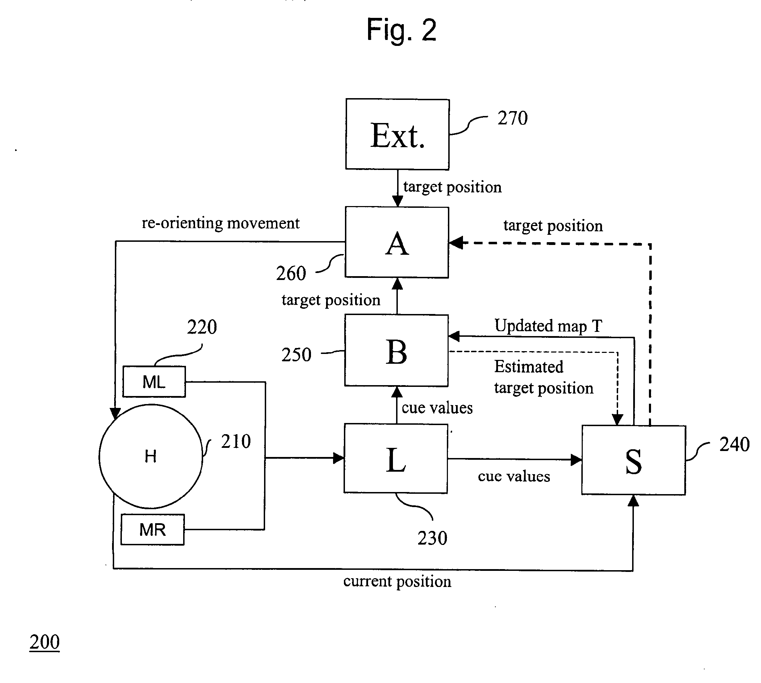

**Figure 2** shows a configuration of a system 200 for sound source localisation (i.e. estimation of the position of the sound source) according to the invention. It is assumed that the sound source (e.g. a talking human) is active over longer periods (when compared to the speed of the online adaptation).

The system 200 comprises a mobile (e.g. rotating) platform 210, such as e.g. the head of a humanoid robot, and a set of at least 2 microphones ML, MR 220. The microphones 220 may e.g. be mounted on the robot's head 210. For the purposes of the following description, but by no means limiting the invention, it is assumed that the microphones ML, MR are arranged symmetrically with the robot head 210 in-between them, such that, when the microphones 220 are equally distanced from the sound source, the position of the sound source as seen from the robot's head 210 is straight ahead, so that the front face of the robots head is directed to the sound source.

The system 200 further comprises a first device L 230 for computing localisation cues C on the basis of the signals supplied from the microphones ML, MR, and a second device B 250 for transforming cue values C into motor coordinates p using a mapping function T. This insofar constitutes a known sound source position estimation set-up as described e.g. in [1,2].

The system according to the invention further comprises a learning module S 240 that receives information about current position p and measured cue values (C(p)). Based on p and C(p) the learning module now updates the mapping function T and sends the updated version to the control device B. In one embodiment of the invention, the learning module S may also initiate rotating movements of the platform H. In a further embodiment of the invention, the learning module S may also receive an estimated target position from the second device B for transforming cue values into motor coordinates p using a mapping function T.

Optionally, the system may further comprise an arbiter device A 260. Nominal target positions for the platform generated e.g. by an external module EXT 270, by the second device B or by the learning module S, may all be fed into the arbiter device A. The arbiter device A may control the execution of orienting movements according to the requirements of the adaptation method or an external control module.

**Figure 3** shows a flowchart 300 of a method for an online calibration of a system for estimating the position of a sound source using a set-up e.g. as described with reference to figure 2.

In step 310, the microphones are rotated towards the sound source. The rotation may be effected using either a previous full scan over all positions, during which IED and/or ITD values are measured by the microphone arrangement, or a gradient-based method analysing measured IED/ITD values.

In step 320, the Intra-aural Time Difference (ITD) between the two microphones is (continously) measured by the device L 230 in the position defined in step 310. This is done by reading the next ITD output from the device L 230.

In step 330, it is verified whether the ITD measured in step 320 is smaller than a predefined threshold ε. As the ITD depends mostly on the differences in distances to the two microphones, an ITD of zero will be approached if the sound source approaches a position in the centre plane of the microphones (almost equal distance to both microphones).

If the ITD is not equal or close to zero, steps 310 and 320 are reiterated, else, the algorithm stops and it is assumed that the microphones are directed to the sound source. Rotating the head until the ITD cue value reaches a predefined threshold ε will bring the sound source to a defined relative position vis-à-vis the microphone arrangement. In case of a robot head and a symmetrical microphone set-up, the defined position is straight ahead so that the robot focuses on the sound source.

During the orienting movements towards a minimal ITD value, all cue value-position pairs can be stored and later used for adaptation of the mapping once the estimation of the position of the sound source has been terminated.

In one embodiment of the invention, the source signals may be split into different frequency channels (e.g. FFT or Gammatone filter bank as in [1]). In this case, the performance is best if the absolute value of ITD summed over many frequency channels (e.g. up to approx. 1 kHz) is used.

In another embodiment of the invention, the above-described method may additionally or alternatively be based on IED.

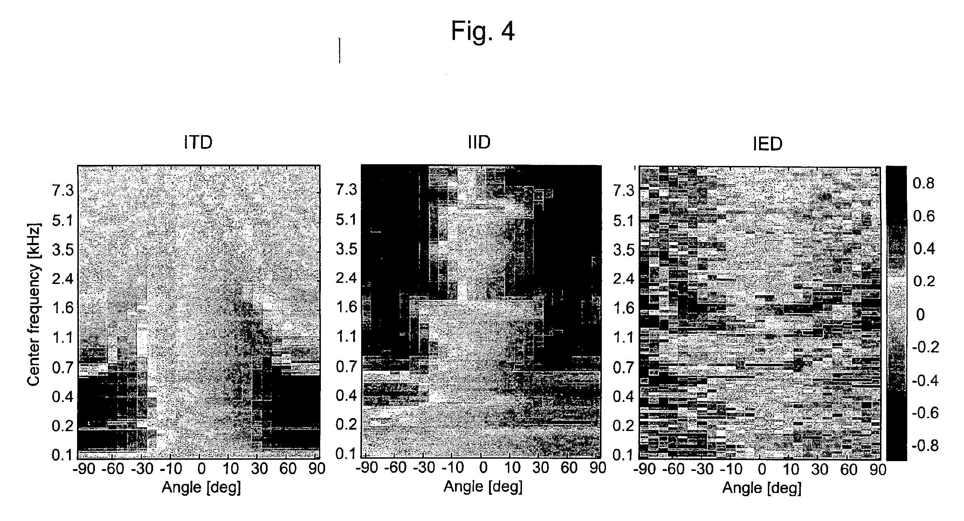

**Figure 4** shows an example of a mapping T(p) between relative source positions (from -90 to +90 degrees relative to the current orientation of H) and cue values (IED, IID, and ITD) for different frequency channels (after applying a Gammatone filter bank).

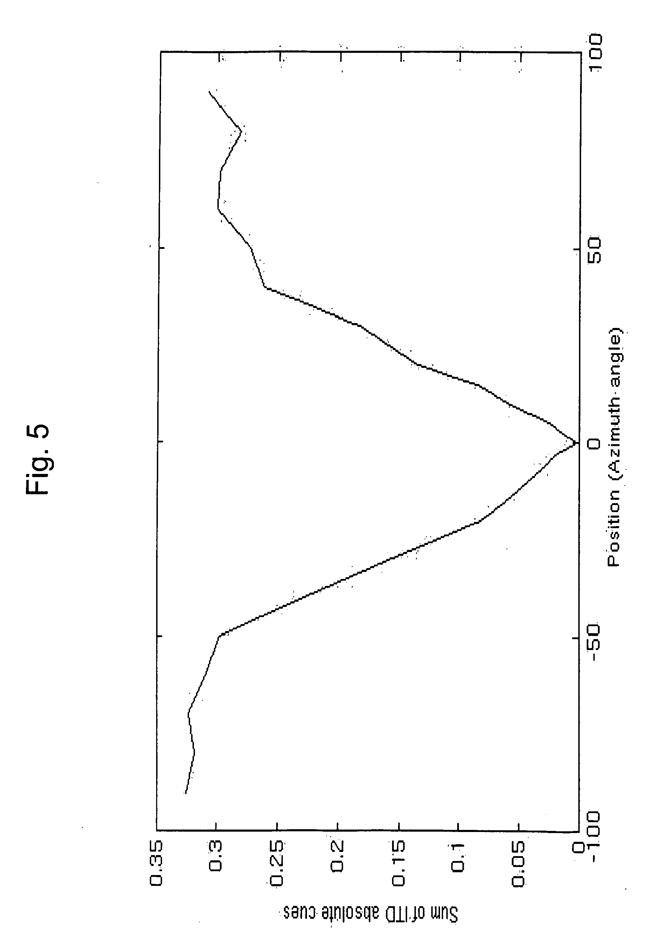

**Figure 5** shows the absolute value of ITD values as a function of position for an example robot system. The minimum is positioned around 0 degrees (straight ahead). The estimation of the true position of the sound source amounts to determining the minimum of this mapping. In one embodiment of the invention, minimum search may be executed by following the gradient of the ITD measurements. In another embodiment of the invention, a minimum search is carried out by doing beforehand a full scan over all positions and then analysing the ITD and/or IED values measured during the full rotational scan.

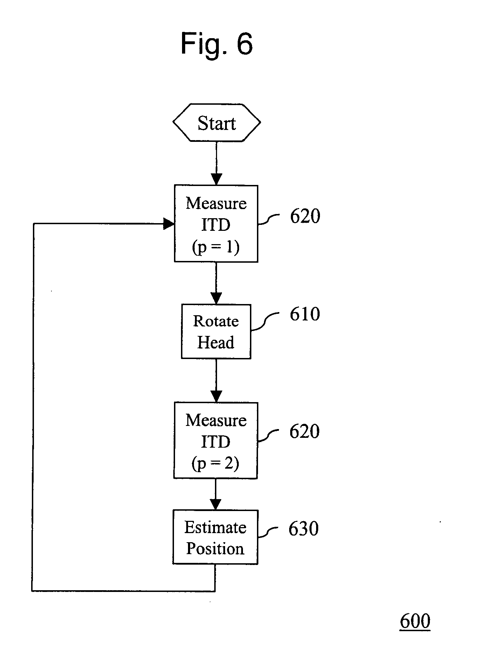

**Figure 6** shows a flowchart 600 of a further method for an online calibration of a system for estimating the position of a sound source. In the following, the "true" position, i.e. the finally estimated position, of the sound source will be designated by s. The position of the system H will be referenced by p.

In step 610, a first measurement of ITD (and/or IED) is made at an initial position p=p1 of the system H. The first measurement is designated by ITD(p1) in the following.

In step 620, the system H is rotated in an arbitrary direction, from an initial position p=p 1 to a position p=p2.

In step 630, a second measurement of ITD (and/or IED) is made at position p=p2 of the system H. The second measurement is designated by ITD(p2) in the following.

In step 640, the true position of the sound source is estimated using the two previously made measurements ITD(p1) and ITD(p2) of ITD (and/or IED). In one embodiment of the invention, it is assumed that there is a linear or at least monotonous relation between source position and cue values. Then, the true position s may be estimated using linear interpolation.

Taking two measurements (ITD(p1), ITD(p2)) at absolute positions p=p1 and p=p2 the true position s of the sound source may be estimated by assuming the following linear model:

$$ITD(p) = a*(p-s)$$

wherein p is the position of system H, a is the slope of the line and s the true position of the source. Using the two measurements a and s may be computed as follows:

$$a = (ITD(p1)-ITD(p2))/(p1-p2)$$

$$s = (ITD(p2)*p1-ITD(p1)*p2)/(ITD(p2)-ITD(p1))$$

Based on this, one may go from absolute (body-centred) coordinates p1 and p2 to relative coordinates (p1-s), (p2-s) and use the two measurements for updating the mapping function T. Note that there is no requirement about the values of p1 and p2 (except that they have to be different), therefore controlling the orientation of H may be left to an external module allowing an adaptation fully in parallel to the normal operation of the system. After measuring a third position p3 and ITD(p3), the same steps as be above may executed for p2 and p3.

In another embodiment of the invention, any other function with a small number of parameters could be used instead of a linear model. The achievable precision of the learning mapping depends on the similarity of the model with the true map. In most cases, at least a rough mapping is possible.

Most approaches for sound source localisation [1,2] use a frequency representation on which they extract cues. Therefore for every sound event there may be a number of cues (e.g. IED, IID, ITD) for many different frequency channels. If it is assumed that only a few channels/cues are decalibrated, it is possible to compute the likely target position from the integration of all cues and channels and then use this estimated position to adapt the mapping.

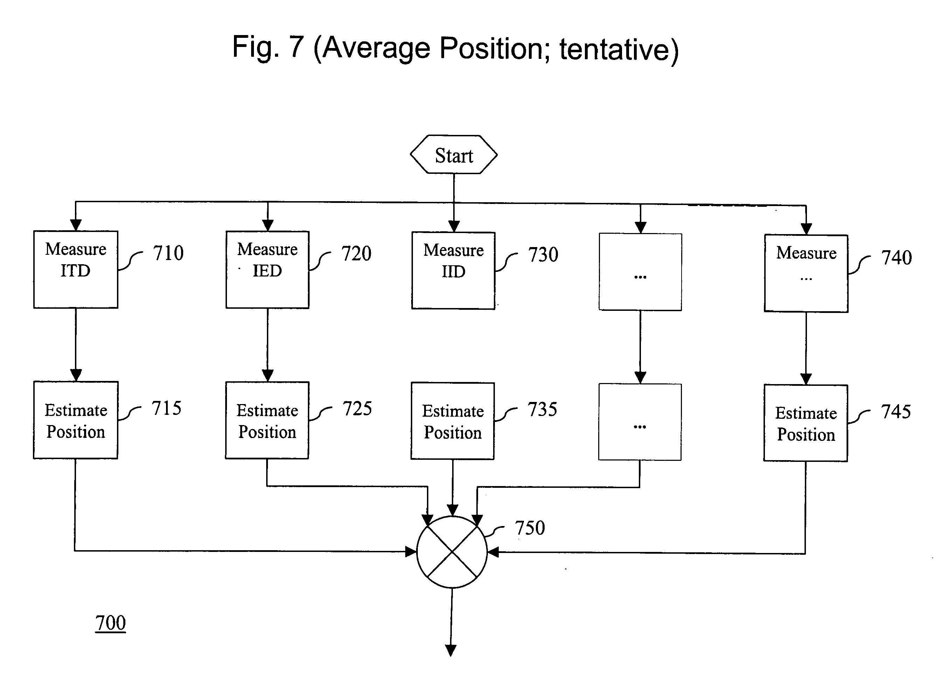

**Figure 7** shows a method for determining the position of a sound source. In a first phase, a multitude of cues is measured in parallel (steps 710, 720, 730, 740). The multitude of cues may comprise Intra-aural Envelope Difference IED, Intra-aural Intensity Difference IID and Intra-aural Time Difference ITD. Optionally, the multitude of cues may be computed for a multitude of different frequency channels.

In a second phase (steps 715, 725, 735, 745), each cue is used individually to estimate the position of the sound source. Then, in step 750, the estimated positions are used to form an average position estimation. The average position estimation may be formed by a method that tolerates errors in individual cues and/or frequency channels. Optionally, the step of computing individual position estimates may be skipped in a method that derives a position estimate directly from the different localisation cues.

In a further embodiment of the invention, it may also be possible to integrate vision input at this stage in the form of an additional cue.

In yet another embodiment of the invention, a weighting of different cues and channels in the integration and localisation process may be added, so that those cues/channels with a low confidence are weighted less. The computation of confidences may be based on how well a specific cue/channel overlaps in its responses (measured over longer periods of time) with the sum of all cues.

As Interaural Intensity Differences (IID) are strongly affected by signal gain factors (a factor that linearly scales the signal), as found in microphones, A/D converters, software pre-processing, etc., a change in the system's gain factor on just one side (or differently on both sides) will seriously affect the IID cue. To counter this problem, an artificial gain factor g(t) for one microphone (e.g. the left one) may be added in one embodiment of the invention that may be adapted in the following way: Whenever the system is focusing on the sound source (ITD < $\varepsilon$), the additional gain factor g(t) may be updated to bring IID to 0:

$$g(t+1) = g(t) * ( 1 - alpha2 * IID(t \mid ITD<\varepsilon) ),$$

where alpha2 is a learning parameter. This assumes that IID is positive (> 0) if the recorded signal is louder in the left microphone than in the right microphone. In the opposite case, the minus sign in the previous equation has to be replaced by a plus sign. The adaptation of the gain factor may also be done separately for all frequency channels.

The different adaptation approaches (as described in relation to figures 3, 6 and 7) have different advantages and disadvantages. The method described with reference to figure 3 can learn the exact mapping, but requires a potentially large number of specific orienting movements to learn the mapping. The method described with reference to figure 6 can work fully in parallel and requires no specific movements but can't the learn the mapping with high precision due to the inherent limitations of the underlying model. Finally, the method described with reference to figure 7 requires that the majority of cue computations are correct.

Also, the methods outlined in Figures 6 and 7 might have a limited capacity to correct errors in the localisation process. This is especially true for the cue integration method which might even decrease performance. Therefore, the localisation error has to be monitored. If the localisation error gets too high or can not be reduced any more, learning approaches 6 and 7 have to be disabled.

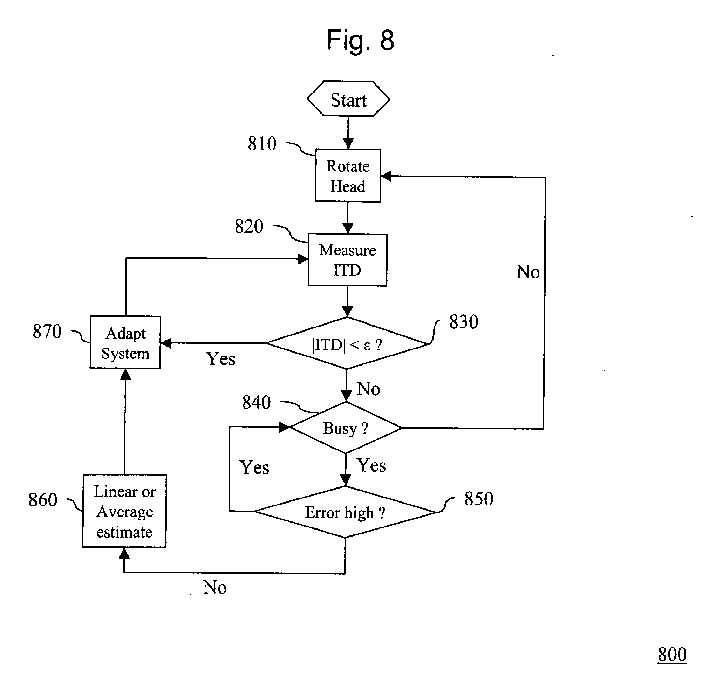

In a further embodiment of the invention, now described in relation to **figure 8,** a robot system that may therefore be in many different head control and learning modes. Different modes may be selected via the arbiter module A. The selection may depend on the mean localisation error E (based on the mean ITD value after a targeting movement). It may also depend on the requirements of the external control system (EXT), e.g. whether there is some job to be executed that requires a movement of H or not.

As shown in figure 8, the head of the localisation system is rotated in step 810. Then, a localisation cue, here ITD, is measured in step 820. In step 830 it is checked whether ITD is smaller than a predefined threshold $\varepsilon$. If yes, the system is adapted given a known position of the sound source. Then, the system waits for the next sound signal (waiting step not shown for simplicity).

If ITD is still larger than a predefined threshold, then the method proceeds to step 840, where it is checked whether the overall system has the capacity to execute extra orienting movements or whether it is busy. If the capacity is present, a new rotation is initiated and the method continues with step 810. If the system is too busy to execute a rotation, then it is checked in step 850 whether the smoothed localisation error is high. If yes, the method returns to step 840. If no, then the position of the sound source may be estimated using the methods described in relation to figures 6 or 7.

The smoothed localisation error is computed by measuring the absolute values of ITD directly after a targeting motion (where ITD values should be around zero). This error is integrated over a plurality of subsequent targeting motions (temporal smoothing)

Learning according to Fig. 6 can be done even when the system is busy.
The only requirement is another executed, movement. This can be driven by a signal from the module EXT or a target orienting movement.

If the localisation error gets too high or can not be reduced any more, the learning approaches described in relation to figures 6 and 7 have to be disabled. Then, the approach described in relation to figure 3 may be used to improve performance. This should only be done, however, if no target positions are given from module EXT or if the localisation performance is very bad (E > threshold). Once performance gets better, the methods described in relation to figures 6 and later 7 may be reactivated.

Switching is executed through a cooperation of modules A and S.

The system is adapted in step 870.

Whenever there is nothing else to do (no outputs from EXT or B), the system can start to home in on the sound source (Fig.3). This has to be done whenever the localisation error (smoothed sum of ITD after targeting motion) is too high. If the error is low enough the learning runs in the background, riding on the movements triggered by modules EXT or B.

REFERENCES:

[1] Kazuhiro Nakadai, Hiroshi G. Okuno and Hiroaki Kitano, Real-time sound source localisation and separation for robot audition. Proceedings of the 2002 international conference on spoken language processing (ICSLP-2002), pages 193 - 196.

[2] Hiromichi Nakashima, Noboru Ohnishi, Toshiharu Mukai, Self-Organization of a Sound Source Localisation Robot by Perceptual Cycle, 9th International Conference on Neural Information Processing (ICONIP'02), 2002.

**Claims**

1. A method for estimating the position of a sound source,
   the method comprising the steps of:

   - rotating (210) at least a first and a second microphone towards the sound source;
   - measuring (220) the Intra-aural Time Difference (ITD) between the two microphones; and
   - repeating (230) the above two steps (210, 220) until the Intra-aural Time Difference (ITD) is smaller than a predefined threshold value ($\varepsilon$).

2. The method of claim 1,
   further comprising, for a pair consisting of a first and a second microphone, the steps of:

   directing a third microphone towards the sound source;
   measuring the Intra-aural Time Difference (ITD) between the second and the third microphone;
   repeating the above two steps until the Intra-aural Time Difference (ITD) is smaller than a predefined threshold value($\varepsilon_2$).

3. The method according to claim 2,
   wherein the mapping learning steps of claim 2 are repeated for several pairs of microphones.

4. The method according to any of claims 1 to 3,
   wherein the source signals detected via the microphones are split into different frequency channels and the absolute value of ITD summed over many frequency channels is used in the ITD measurement step.

5. The method according to claim 1,
   wherein additionally the IED is used in the measurement step.

6. The method according to claim 1,
   wherein for controlling the rotating step (210), a minimum search is executed by following the gradient of previous ITD measurements.

7. The method according to claim 1,
   wherein a minimum search is executed by doing a full ITD measurement scan over all rotational positions of the microphones in order to rotate the microphones to the sound source such that the sound source is positioned in the middle plane of the microphones.

8. A method for determining the position of a sound source, comprising the steps:

   making (510) a first measurement (ITD(p1)) of ITD and/or IED of acoustical signals originating from a sound source at an unkown position, at an initial position (p1) of a system H carrying microphones;
   rotating (520) the system H from the initial position (p1) to a further position (p2) different to the initial position;
   making (530) a second measurement (ITD(p2)) of ITD (and/or IED) at position (p2) of the system H; and
   estimating (540) the position of the sound source using the two previously made measurements (ITD(p1), ITD(p2)) of ITD (and/or IED).

9. The method according to claim 8,
wherein the position of the sound source is estimated using linear interpolation.

10. The method according to claim 8,
wherein the position of the sound source is estimated using the model:

$$ITD(p) = a*(p-s) ,$$

wherein p is the position of the system H, a is the slope of the line and s the position of the sound source.

11. A method for determining the position of a sound source, comprising the steps:

measuring, optionally for different frequency channels, a multitude of cues in parallel, the multitude of cues comprising IED, IID and ITD;
estimating the position of the sound source by mapping all measured cues to an average position estimation.

12. The method according to claim 11,
wherein one cue is based on visual input.

13. The method according to claim 11,
wherein a weighting of different cues and channels according to their confidence is used for estimating the position of the sound source.

14. The method according to claim 12,
wherein the computation of the confidence of a specific cue or channel is calculated based on the overlap of its responses with the sum of all cues from previous measurements.

15. The method according to any of the preceding claims, further comprising the steps:

if the ITD is smaller than a pre-set threshold value $\varepsilon$, carrying out an adaptation by updating a gain factor g(t) for one microphone such that IID becomes zero:

$$g(t+1) = g(t) * ( 1 - alpha2 * IID(t \mid ITD<\varepsilon) ),$$

wherein alpha2 is a learning parameter.

16. The method according to claim 15,
wherein the adaptation is done separately for all frequency channels.

17. A method for estimating the position of a sound source, comprising the steps of:

while rotating (710) a robot's head carrying two microphones as instructed by an external module (EXT);
measuring (720) the ITD of acoustical signals from the sound source;
checking (730) whether the ITD is smaller than a predefined value ($\varepsilon$) and, if yes, adapting the system given the known position of the sound source (which is 0 degrees relative to the current position of the head), and waiting for the next sound signal;
and if no,
checking (740) if the overall system has the capacity to execute extra orienting movements and, if yes, initiating a new rotation (710); else
checking (750) whether the smoothed localisation error is low; if yes estimating (760) the position of the sound source using a method according to one of claims 6 to 8; or
estimating (770) the position of the sound source using a method according to any of claims 9 to 12.

18. The method according to claim 17,

further comprising the steps:

checking (780) whether the error is larger than a predefined value;
and, if yes, enforcing (790) a limited set of rotations using the method according to one of claims 1 to 5

19. A system (100) for determining the position of a sound source, comprising:

a rotating platform (110) carrying a set of at least two microphones (120);
a first device (L) for computing localisation cues (C) of acoustical signals from the microphones;
a second device (B) for transforming the cue values (C) into an estimated position (p) of the sound source using a mapping function (T); and
a learning module (S) receiving information about the current estimated position (p) and the measured cue values (C(p)) and sending an updated version of the mapping function (T) to the second device (B).

20. The system (100) according to claim 19,
wherein the learning module further receives an estimated sound source position from the second device (B).

21. The system (100) according to claim 19,
wherein the learning module (S) sends target positions to the system (H).

22. The system according to claim 19,
wherein the microphones (120) are set up symmetrically around the centre axis of the rotating platform (110).

23. The system according to claim 19,
further comprising an arbiter module (A) controlling the execution of orienting movements of the rotating platform.

24. The system (100) according to claim 23,
wherein the learning module (S) sends target positions to the arbiter module (A).

25. The system according to claim 19,
further comprising an external control module according to whose requirements the execution of orienting movements is controlled.

26. A computer program product that, when read and executed by a computer, implements one of the methods according to claims 1 to 18.

# Fig. 1

EP 1 862 813 A1

Fig. 2

# Fig. 3

300

## Fig. 4

Fig. 5

Fig. 6

```
                    ┌──────────┐
                    ⟨  Start   ⟩
                    └────┬─────┘
                         │
                         ▼
                   ┌───────────┐
                   │  Measure  │
        ┌─────────▶│    ITD    │⌒ 620
        │          │ (p = 1)   │
        │          └─────┬─────┘
        │                │
        │                ▼
        │          ┌───────────┐
        │          │  Rotate   │⌒ 610
        │          │   Head    │
        │          └─────┬─────┘
        │                │
        │                ▼
        │          ┌───────────┐
        │          │  Measure  │
        │          │    ITD    │⌒ 620
        │          │ (p = 2)   │
        │          └─────┬─────┘
        │                │
        │                ▼
        │          ┌───────────┐
        │          │ Estimate  │⌒ 630
        │          │ Position  │
        │          └─────┬─────┘
        │                │
        └────────────────┘
```

<u>600</u>

EP 1 862 813 A1

# Fig. 7 (Average Position; tentative)

EP 1 862 813 A1

# Fig. 8

Start

810 — Rotate Head

820 — Measure ITD

830 — |ITD| < ε ?

870 — Adapt System ← Yes

No

840 — Busy ?

Yes    Yes

850 — Error high ?

860 — Linear or Average estimate

No

No

EP 1 862 813 A1

800

**European Patent Office**

## EUROPEAN SEARCH REPORT

Application Number

EP 06 01 1270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDERSSON S B ET AL: "Robot phonotaxis with dynamic sound-source localization" ROBOTICS AND AUTOMATION, 2004. PROCEEDINGS. ICRA '04. 2004 IEEE INTERNATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 4833-4838, XP010768158 ISBN: 0-7803-8232-3 | 8-10,26 | INV. G01S3/808 G01S3/805 |
| A | * abstract * * page 4833, paragraph I * * page 4834, paragraph II * | 11-18 | |
| X,D | NAKASHIMA H ET AL: "Self-organization of a sound source localization robot by perceptual cycle" NEURAL INFORMATION PROCESSING, 2002. ICONIP '02. PROCEEDINGS OF THE 9TH INTERNATIONAL CONFERENCE ON NOV. 18-22, 2002, PISCATAWAY, NJ, USA,IEEE, vol. 2, 18 November 2002 (2002-11-18), pages 834-838, XP010638836 ISBN: 981-04-7524-1 | 19-25 | |
| Y | * abstract; figures 1-4 * | 12 | **TECHNICAL FIELDS SEARCHED (IPC)** G01S |
| A | * pages 835-836, paragraph 2.2 - paragraph 2.3 * | 1-7,26 | |

-/--

The present search report has been drawn up for all claims

| Place of search | Date of completion of the search | Examiner |
|---|---|---|
| The Hague | 6 November 2006 | Vial, Antoine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**European Patent Office**

**EUROPEAN SEARCH REPORT**

Application Number

EP 06 01 1270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HORIUCHI T ET AL: "Iterative compensation of microphone array and sound source movements based on minimization of arrival time differences" SENSOR ARRAY AND MULTICHANNEL SIGNAL PROCESSING WORKSHOP PROCEEDINGS, 2004 BARCELONA, SPAIN 18-21 JULY 2004, PISCATAWAY, NJ, USA,IEEE, 18 July 2004 (2004-07-18), pages 566-570, XP010832556 ISBN: 0-7803-8545-4 | 1-3,5,6, 26 | |
| Y | * abstract * | 4,7 | |
| A | * pages 566-567, paragraphs 2.1,2.2 * | 17,18 | |
| | ----- | | |
| X | EP 1 600 791 A (HONDA RES INST EUROP GMBH [DE]) 30 November 2005 (2005-11-30) | 11,13, 14,26 | |
| Y | * abstract * | 4,12 | |
| A | * paragraphs [0004], [0005], [0008], [0009] * | 17,18 | |
| | ----- | | |
| Y | US 3 838 593 A (THOMPSON J) 1 October 1974 (1974-10-01) | 7 | TECHNICAL FIELDS SEARCHED (IPC) |
| A | * abstract; claim 11 * | 1-6 | |
| | ----- | | |
| A | BERGLUND E ET AL: "Sound source localisation through active audition" INTELLIGENT ROBOTS AND SYSTEMS, 2005. (IROS 2005). 2005 IEEE/RSJ INTERNATIONAL CONFERENCE ON EDMONTON, AB, CANADA 02-06 AUG. 2005, PISCATAWAY, NJ, USA,IEEE, 2 August 2005 (2005-08-02), pages 509-514, XP010857128 ISBN: 0-7803-8912-3 * abstract * * pages 1-2, paragraphs II,III * | 1-26 | |
| | ----- | | |

The present search report has been drawn up for all claims

| Place of search | Date of completion of the search | Examiner |
|---|---|---|
| The Hague | 6 November 2006 | Vial, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 06 01 1270

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2006

| Patent document cited in search report | | Publication date | Patent family member(s) | | Publication date |
|---|---|---|---|---|---|
| EP 1600791 | A | 30-11-2005 | JP | 2005338086 A | 08-12-2005 |
| | | | US | 2005276419 A1 | 15-12-2005 |
| US 3838593 | A | 01-10-1974 | CA | 994903 A1 | 10-08-1976 |
| | | | DE | 2352532 A1 | 16-05-1974 |
| | | | GB | 1452789 A | 13-10-1976 |
| | | | GB | 1452788 A | 13-10-1976 |
| | | | JP | 49079290 A | 31-07-1974 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1586421 A1

**Non-patent literature cited in the description**

- Spatial Hearing: The Psychophysics of Human Sound Localisation. The MIT press, 1996
- **KAZUHIRO NAKADAI ; HIROSHI G. OKUNO ; HIROAKI KITANO.** Real-time sound source localisation and separation for robot audition. *Proceedings of the 2002 international conference on spoken language processing (ICSLP-2002,* 193-196
- **HIROMICHI NAKASHIMA ; NOBORU OHNISHI ; TOSHIHARU MUKAI.** Self-Organization of a Sound Source Localisation Robot by Perceptual Cycle. *9th International Conference on Neural Information Processing (ICONIP'02,* 2002